# EUROPEAN PATENT SPECIFICATION

(11) **EP 2 772 380 B1**
(45) Date of publication and mention of the grant of the patent: **19.12.2018**
(21) Application number: 14156744.6
(22) Date of filing: 26.02.2014
(51) Int. Cl.: G01C 21/36, B60K 35/00, B60K 6/20

(54) **System, vehicle with such a system and method for actively providing information regarding the location of a refuelling access point and/or charging connector on a vehicle**
System, Fahrzeug mit einem derartigen System und Verfahren zum aktiven Bereitstellen von Information über den Ort eines Kraftstoffeinfüllstutzens und/oder eines Ladeanschlusses am Fahrzeug
Système, véhicule avec un tel système et procédé pour mettre en disposition d'information sur le lieu de la tubulure de remplissage de carburant et/ou un connecteur de charge sur le véhicule

(30) Priority: 01.03.2013 GB 201303631
(43) Date of publication of application: 03.09.2014
(73) Proprietor: Nissan Motor Manufacturing (UK) Ltd., Cranfield Bedfordshire MK43 0DB (GB)
(72) Inventor: Church, Christopher, Cranfield, Bedfordshire MK43 0DB (GB); Linchyk, Alexandra, Cranfield, Bedfordshire MK43 0DB (GB)

(56) References cited:
- EP-A1- 2 196 370
- DE-A1-102007 018 070
- US-A1- 2011 224 841
- US-A1- 2011 288 765

## Description

### Technical Field of the Invention

The present invention relates to a system for providing information regarding the location of at least one refuelling access point and/or charging connector on a vehicle. The invention also relates to a vehicle having such a system; and to a method of selectively providing a driver of a vehicle with information regarding the location of at least one refuelling access point and/or charging connector on a vehicle.

### Background to the Invention

It is common for road vehicles with internal combustion engines, such as cars, vans, buses, trucks, and the like, to have an access point (also known as a fuel filler) for refilling a fuel tank, located on one side of the vehicle. Most fuel stations are designed so that vehicles can be positioned on either side of a fuel pump. It is generally advantageous to position a vehicle so that its refuelling access point is on the side of the vehicle closest to the pump. This usually ensures that the refuelling hose can reach the refuelling access point easily, and avoids the need to stretch the hose around or over the rear of the vehicle; which some drivers may not be physically capable of doing, and which risks damaging the paintwork of the vehicle.

Vehicles are often provided with a passive icon (which may be an arrow on the fuel gauge) as part of a dashboard display, which indicates the side on which the refuelling access point is located; but many drivers are unaware of the icon and its significance. Hence, for drivers who are unfamiliar with the vehicle they are driving, in particular drivers of pool or hire vehicles for example; or for people who simply have difficulty in remembering on which side the refuelling access point is located; approaching the pumps can give rise to stress as they try to work out which side of the vehicle the refuelling access point is located on, before positioning the vehicle adjacent to a fuel pump. Furthermore, if a driver parks on the wrong side of the pump, difficulties can arise in trying to reposition the vehicle, particularly if the fuel station is busy and there are queues at the pumps. Multi-vehicle households can encounter confusion, as each vehicle may have its fuel filler in a different location on the vehicle.

Similar issues arise in electric or hybrid vehicles having rechargeable batteries. Such vehicles have a charging connector; and it is desirable to position the vehicle so that the charging connector is located adjacent to a charging point at a charging station. For example, some charging stations may have charging points on either side of a charging post so that vehicles can be positioned on either side of the post for charging. In other cases, say where charging points are only located on one side of a post, or if only one side is available, the driver may have to decide whether to park forwardly or to reverse the vehicle so as to position the charging connector adjacent to a charging point.

These problems are compounded for hybrid or dual fuel vehicles, which may have fuel fillers and charging connectors; or fillers for two different fuels. The routine operation of adding fuel or electric charge can become very complicated, as the driver has to determine whether to use a filler or connector on the left, right, front, or rear of the vehicle; or some combination of these choices, such as a fuel filler on the left rear quarter of the vehicle, and a charge connector on the left front quarter.

EP 2196370, which comprises the features mentioned in the preamble of claims 1 and 8, discloses a combined gauge for a hybrid vehicle, which indicates a level of liquid fuel and the amount of battery charge remaining. US 2011/0288765 discloses a navigation system which determines a route for an electric vehicle which includes charging stations on the route. US 2011/0224841 discloses a means of monitoring vehicle battery charge remotely, and initiating battery charging remotely. DE 10 2007 018 070 discloses a fuel gauge whose display changes colour when the indicated fuel level falls below a threshold value.

There is a need then, for a system and/or method for actively providing the driver of a vehicle with information regarding the location of at least one refuelling access point and/or charging connector on the vehicle, especially at a time when refuelling/recharging is predicted. There is also a need for a vehicle having such a system and/or implementing such a method.

Many vehicles are provided with a navigation system that uses the Global Positioning System (GPS) to identify a vehicle's current position, and to provide directions to the driver for reaching a desired destination. Such navigation systems have a memory on which is stored one or more databases containing data. The data may include map data, such as road maps; and may also include data regarding points of interest such as the location of supermarkets, car parks and fuel and/or charging stations. A typical GPS navigation system will include a screen on which information can be displayed visually; and a sound system for providing information to the driver, such as directions and warnings, audibly. Typically the screen is used to display map data, which may include an indication of the vehicle's current position and direction of travel; and which may show at least part of the vehicle's route to a target destination. The screen may be divided into sections so that additional information and/or warnings can be provided in part of the screen, whilst continuing to display a map showing all or part of a vehicle route.

### Summary of the Invention

According to a first aspect of the invention, there is provided a system for actively providing information regarding the location of at least one refuelling access point and/or charging connector on a vehicle in accordance with claim 1.

Further features of the first aspect are set out in the claims dependent on claim 1.

According to a second aspect of the invention, there is provided a vehicle having a system in accordance with the first aspect as claimed in claim 7.

According to a third aspect of the invention, there is provided a method for actively providing information regarding the location of at least one refuelling access point and/or charging connector on a vehicle in accordance with claim 8.

Further features of the third aspect of the invention are set out in claim 9.

### Detailed Description of the Invention

In order that the invention may be more clearly understood, an embodiment thereof will now be described - by way of example only - with reference to the accompanying drawings, of which:
Figure 1 is a schematic plan view of a vehicle showing common prior art locations for fuel fillers and charge connectors;
Figure 2 is a schematic illustration of a system for actively providing information regarding the location of at least one refuelling access point and/or charging connector on a vehicle in accordance with an embodiment of the invention;
Figure 3 is a flow chart illustrating one method for actively providing information regarding the location of at least one refuelling access point and/or charging connector on a vehicle for use in the system of Figure 2;
Figure 4 shows part of a vehicle dashboard including a display screen forming part of the system of Figure 2, illustrating a first display option; and
Figure 5 is a view similar to that of Figure 4, but illustrating an alternative display option.

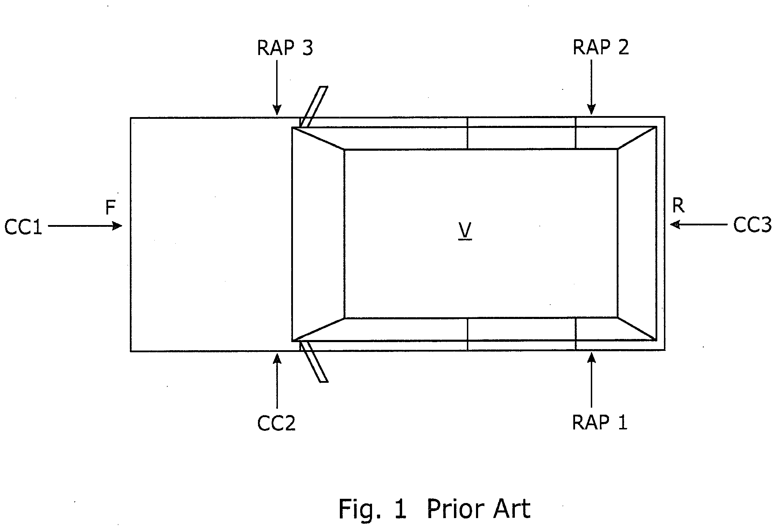

**Figure 1** shows a number of possible locations on a vehicle V for refuelling access points: RAP1 on a left rear wing or quarter panel; RAP2 on a right rear wing or quarter panel; or RAP3 on a right front wing or quarter panel. Position RAP3 may be used for a front-mounted fuel tank for a mid-engined or rear-engined vehicle. A truck or bus could have a side-mounted fuel tank with a fuel filler located in a similar position on the vehicle plan, behind and to one side of a driver's position, which in a truck could be a forward control vehicle cab.

Figure 1 also shows several possible locations for an electrical charging connector: CC1 at the centre of the front of the vehicle; CC2 on a left front wing or quarter; and CC3 at the centre of the rear of the vehicle.

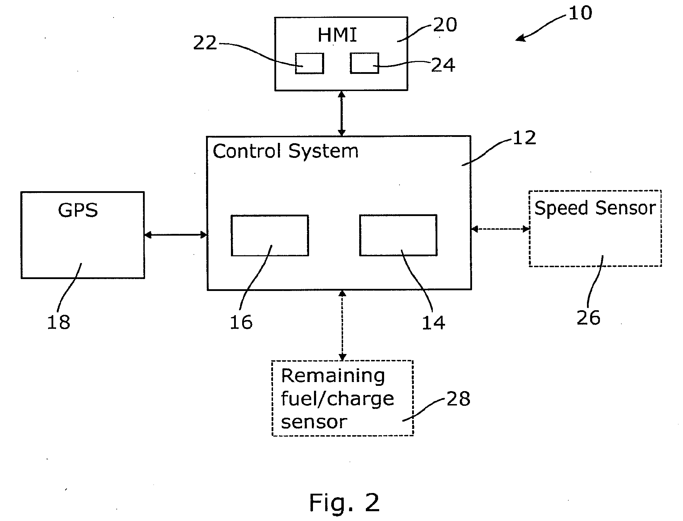

**Figure 2** illustrates schematically a system 10 for actively providing information regarding the location of at least one refuelling access point and/or charging connector on a vehicle to which it is fitted.

The system 10 is fitted to a vehicle. It is expected that it would usually be integrated as part of a vehicle's original control/navigation system; but it could be provided as a separate unit for installation in a vehicle as an after-market product. The system 10 is particularly intended for use with a vehicle having an internal combustion engine running on a fuel such as petrol, diesel, or LPG. These types of vehicle have a fuel tank in which the fuel is stored. The fuel tank has a neck leading to a refuelling access point which is often located on one side of the vehicle or the other, as described above with reference to Figure 1.

Fuel stations typically comprise a number of pumps aligned in ranks. Vehicles are able to park on either side of the pumps for refuelling. For ease of refuelling, drivers usually prefer to park so that the refuelling access point is on the side of the vehicle closest to the pump. The system 10 is intended to provide a driver with information identifying the location of the refuelling access point, when the system detects a triggering event that is indicative that the vehicle is about to enter, or has just entered, a fuel station for refuelling.

Whilst the invention is particularly useful for vehicles having internal combustion engines, it can also have application to vehicles having an electric motor and which run on power supplied by rechargeable batteries. Such vehicles, which include hybrid vehicles having both an electric motor and an internal combustion engine, will have a charging connector to which a cable from a recharging point can be connected to recharge the batteries. In some cases it may be advantageous for the driver to be given information regarding the location of the charging connector in order that they can appropriately position the vehicle adjacent to a charging point.

For clarity, the preferred embodiment of the system 10 will be described in detail below in relation to a vehicle having an internal combustion engine running on a fuel, and which has a refuelling access point. However, those skilled in the art will be able to readily adapt the system 10 for use in a vehicle having an electric motor and which has a charging connector through which the batteries are charged from a charging point at a charging station. Accordingly, for use of the system 10 in relation to an electric vehicle, references to fuel should be read as incorporating an electrical charge, references to a refuelling access point should be read as incorporating a charging connector, references to a fuel station should be read as incorporating a charging station, and references to refuelling should be read as incorporating recharging; all in the following description.

The system 10 comprises a control system 12 including at least one processor 14 and memory 16. The memory 16 holds a local database containing data identifying the geographical location of fuel stations. The data may take the form of latitude/longitude coordinates for the fuel stations. Typically, the memory 16 will store map data for a particular geographic region, including data relating to the road system of that region; and data relating to the location and nature of points of interest within the region such as supermarkets and car parks, as well as the fuel stations. Any suitable memory can be used, which may be non-volatile, including flash memory and other forms of computer storage such as hard drives or optical discs.

In one embodiment, map data including the local database containing data identifying the geographical location of fuel stations is stored on an optical disc which is inserted into a disc reader forming part of the system 10. This allows the map data to be updated on a regular basis by changing the disc, without having to connect the system to a remote server. It also allows discs covering different geographical regions to be provided, which can be changed if the vehicle is used in different geographical regions.

This arrangement is particularly suitable for use when the system 10 is permanently integrated into a vehicle. In this case, the memory 16 may also include a vehicle specific memory for storing additional data, such as preference data input by the driver; and other data relating to the particular vehicle to which the system 10 is fitted. This vehicle specific memory may be permanently fitted in the control system 12 on the vehicle. The vehicle specific memory may be used to hold, for example, data identifying the location of a refuelling access point on the vehicle, data relating to the type of fuel used by the vehicle, and/or data regarding a predefined message for display when a triggering event is determined to have occurred.

The system 10 has a global positioning system (GPS) unit 18 that receives satellite signals via an antenna, and computes location data for the vehicle in real time. The GPS may compute latitude and longitude coordinates identifying the geographical location of the vehicle. Other systems for identifying the location of the vehicle could also be used.

The system 10 includes a Human Machine Interface (HMI) 20 that can be used to convey information to a driver of the vehicle. The HMI will typically comprise a display screen 22 on which information can be displayed visually, and a sound system 24 through which information can be conveyed audibly.

The processor 14, which may be a microprocessor, is programmed to carry out a comparison of the vehicle location data and the fuel station location data. The processor is also programmed to determine in accordance with predefined criteria whether a triggering event has occurred indicative that the vehicle is about to enter, or has entered, a fuel station for refuelling. In one embodiment, the criteria for a triggering event are that the vehicle is at or within a predetermined distance of a fuel station and that the vehicle's speed is at or below a threshold level.

For example, the processor 14 may be configured to determine that a triggering event has occurred when it determines that: the vehicle is at or within a distance of 25 metres of a fuel station; and that the vehicle's speed is at or below 30 kilometres per hour (kph). When the processor 14 determines that a triggering event has occurred, the system 10 is configured to convey information regarding the location of the refuelling access point using the HMI 20.

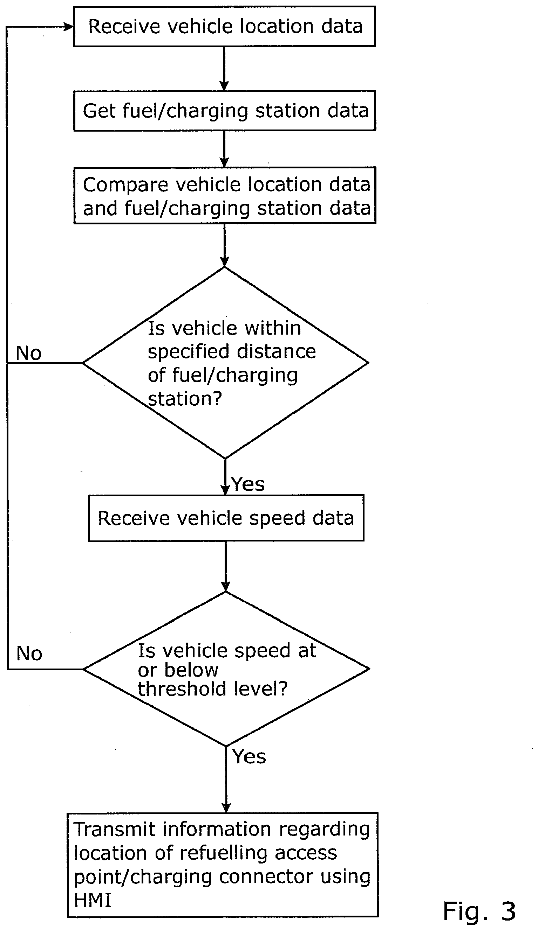

**Figure 3** illustrates one suitable method that can be used in the system 10 to apply the above criteria. It will be appreciated, however, that the precise sequence of steps can be varied whilst achieving the same end result.

The GPS 18 may be used to determine the vehicle's speed. Alternatively, the system may include a sensor arrangement (26, Fig. 2) for determining the vehicle speed, and to provide vehicle speed data to the processor via a suitable interface. Most vehicles have a sensor arrangement that is used to determine the vehicle's speed for display to the driver. Typically, this will comprise a sensor which detects the speed of rotation of part of a transmission system of the vehicle; and which provides an output indicative of the speed of the vehicle. In some cases, the system 10 can make use of such a sensor arrangement to provide the required vehicle speed data. Alternatively, a dedicated vehicle speed sensor arrangement 26 can be provided as part of the system 10.

The criteria for determining when a triggering event has occurred are selected in an effort to accurately predict when the vehicle may be about to enter, or has just entered, a fuel station; in order that information regarding the location of the refuelling access point is provided to the driver in a timely manner, but preferably only when it is expected to be required. Accordingly, the criteria can be varied as necessary to achieve an optimum selective output of the information. Thus the threshold distance might be varied and could be set higher or lower than 25 metres. The threshold distance could be set at 100 metres, or 50 metres, or 25 metres, or 10 metres for example. Similarly, the threshold speed can also be varied above or below 30 kph and could for example be 50 kph, or 25 kph, or 16 kph, or 8 kph, or 4 kph. These threshold values are provided only as non-limiting examples and the actual threshold values may vary. The threshold values may be preset in the system 10; or the system 10 may have an interface that enables a user to enter and/or alter the threshold values. The threshold values could be held on the vehicle specific part of the memory 16.

Additional criteria can also be used to improve the ability of the system 10 to accurately predict when information regarding the location of the refuelling access point should be conveyed. For example, the system 10 may be configured so that it will only convey the information when the amount of fuel in the fuel tank is at or below a threshold level when all the other criteria are met. The threshold fuel level could be set, for example, at ½ tank or ¼ tank, or in terms of the distance the vehicle is expected to be able to travel with the remaining fuel. Most vehicles have a fuel gauge sensor arrangement 28 including a sender unit mounted in the fuel tank to measure the fuel level; and a display to show the driver the amount of fuel detected so that the driver can determine when refuelling is necessary. In some vehicles, the information from the fuel level sensor is used to calculate how far the vehicle can be expected to travel on the remaining fuel. This information can also be displayed to the driver.

Depending on the sophistication of the system, the predicted distance may be based on average fuel consumption figures for the type of vehicle; or on historical data regarding the fuel consumption of the actual vehicle. Data regarding the amount of fuel remaining can be provided to the processor 14 by the sensor arrangement 28 via a suitable interface. Historical data regarding refuelling of the vehicle may also be saved to the memory 16. The system may be configured to evaluate the historical data to set an appropriate threshold value to be used to determine when a triggering event has occurred. For example, if a vehicle is regularly refuelled when the tank is just under half full, then the system can be configured to set the threshold level for the fuel at a ½ tank. However, if the vehicle has historically been refuelled when the level of fuel is below a ¼ tank, then the threshold fuel level may be lowered. The threshold fuel value or "distance to empty" may be set by the driver, for example by using buttons on or adjacent to HMI screen 22.

In addition to data regarding the location of fuel stations, the local database may also contain information regarding the type of fuel available at respective fuel stations. For example, the database might contain data indicating whether less commonly available fuel types such as LPG, and/or electric charging facilities, are available at specific fuel stations. In this case, the system 10 may be configured so that the processor 14 only determines that a triggering event has occurred if a particular fuel type used by the vehicle is available at the closest fuel station. This might be particularly advantageous where the vehicle runs on a fuel type that is not commonly available, such as LPG. The system may be configured to override this criterion, and to determine that a triggering event has occurred where no information regarding fuel types is recorded in the database for a particular fuel station; but the other criteria are met.

Where a vehicle has two sources of power, or can use two fuels stored in separate tanks, system 10 may be arranged to determine which fuel or power source needs to be topped up more urgently. For example, a dual fuel vehicle may have plenty of petrol, but not much LPG; or a hybrid vehicle may have well charged batteries, but be short of petrol. Where different fuel fillers and/or a charging point are located in different areas of the vehicle, system 10 may be configured to display on screen the location of the type of filler or charger requiring more urgent attention; with the further option of choosing a filler, or source of energy. For example, the driver may not have time to stop and charge up a hybrid vehicle's batteries, and may thus choose to add petrol instead. Furthermore, fuelling preferences may be correlated to a particular vehicle user; for example, by the use of programmable "his and hers" ignition keys or cards.

The vehicle may have other sensors or means of inputting data, that can be used to refine the system 10 to more accurately predict the need to display information regarding the location of the refuelling access point.

In an alternative embodiment - where the local database also includes map data identifying the location of a road system as well as the location data for fuel stations - the system may be configured to be able to determine when the vehicle has left the road system to enter a fuel station, and to use this as a triggering event to display information regarding the location of the refuelling access point on the vehicle.

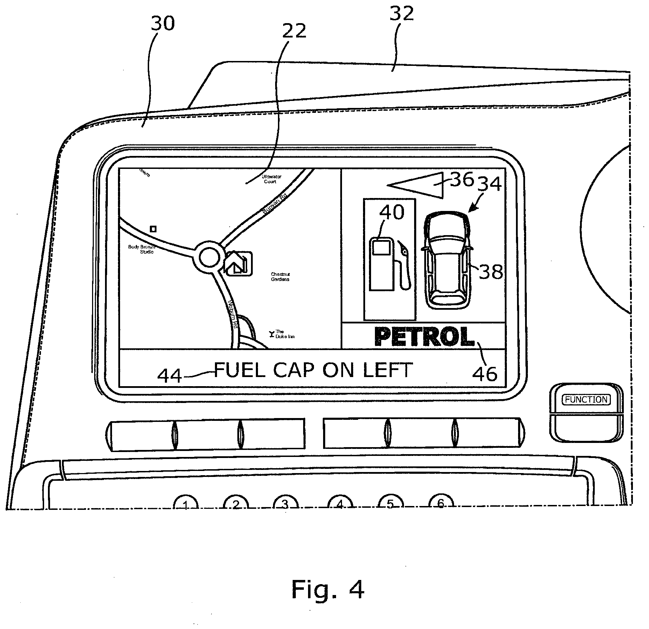

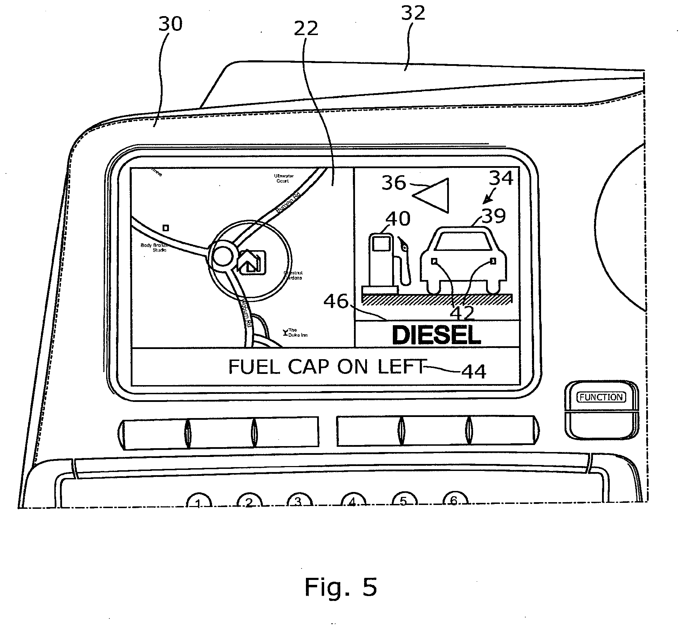

Information regarding the location of the refuelling access point on the vehicle can be conveyed through the HMI in different ways. Where the HMI has a sound system 24, the information could be conveyed audibly by means of a message that could be as follows: "Fuel cap on left/right". It may also be necessary to specify whether the fuel filler or charging point is at the front or rear of the vehicle. Alternatively, or in addition, the information could be conveyed visually through the screen 22 as illustrated in **Figures 4** **and** **5**, which show a screen 22 forming part of a display 30 in a dashboard 32. It is expected that the display screen 22 will be part of an on-board navigation system which is used to convey route and other information. When the processor 14 determines that a triggering event has occurred, information to tell the driver where the refuelling access point is located is displayed on the screen 22. If the screen is being used to convey route information, then information regarding the refuelling access point may be displayed on part of the screen only so that the route information can continue to be displayed on another part. (The refuelling access point information may then be selected as a full screen view if required)

Information regarding the location of the refuelling access point can be provided visually in a range of different ways. For example, as indicated on the right hand side of the screen 22 in Figures 4 and 5, a pictogram 34 could be used to illustrate on which side of a fuel pump the vehicle should be positioned; and/or an arrow 36 can be displayed that points to the side of the vehicle on which the refuelling access point is located. In these embodiments, the pictogram 34 shows an image 38 or 39 representative of the vehicle V; in combination with an image 40 of a fuel pump. In Figure 4 the vehicle image 38 shows the vehicle V in plan; whereas in Figure 5, an image 39 representative of a rear end view of the vehicle V is used. In this latter case, the vehicle image could be coloured to show tail lights 42 in red. It will be appreciated that other suitable symbols could be used. In addition, or as an alternative, to a pictogram 34, a simple text message 44 could be displayed as illustrated at the bottom of the screen 22 in Figures 4 and 5.

It will be appreciated that the information provided may not explicitly identify the location of the refuelling access point but may provide information regarding the location of the refuelling access point implicitly by indicating which side of a fuel pump and/or in which orientation the vehicle should be positioned for refuelling.

In addition to information regarding the location of the refuelling access point, other useful information could also be displayed. As illustrated in Figures 4 and 5, for example, information 46 regarding the type of fuel used by the vehicle can be provided. The message could be colour coded, for example with a green background for petrol and black for diesel, to correspond with the standard colour codes used in fuel stations, and on or around filler caps. It will be appreciated that such colour coding may differ in different markets.

Data regarding the location of the refuelling access point and/or the type of fuel used by the vehicle may be stored in the memory 16. The system 10 may be configured to retrieve this data, and to generate a suitable message to be displayed or transmitted when the processor 14 determines that a triggering event has occurred. Alternatively, the data for displaying a predefined message containing information relevant to the particular vehicle in which the system 10 is fitted may be stored in the memory; and retrieved when the processor determines that a triggering event has occurred.

The system 10 will most likely be provided as part of a vehicle navigation system used to provide route information, and which includes the display screen 22 and sound system 24. The system 10 may include an interface that allows a user to select various options and/or to set threshold values for the various criteria. The system 10 may include an option to turn off messaging regarding the location of the refuelling access point where it is not required.

The above embodiments are described by way of example only. Many variations are possible without departing from the scope of the invention as defined in the appended claims.

## Claims

1. A system (10) for actively providing information regarding the location of at least one refuelling access point (RAP1, RAP2, RAP3) and/or charging connector (CC1, CC2, CC3) on a vehicle (V) in which the system is fitted, the system (10) comprising:
a navigation system capable of determining the geographical location of the vehicle (V) and generating data indicative of the vehicle's location, and a control system (12) including a processor (14);
the system (10) also comprising a human machine interface (20) for conveying information; the system further comprising means (28) for determining the amount of fuel/charge remaining and generating fuel/charge level data,
the control system being configured to determine when a triggering event has occurred;
and to cause information (34, 36, 44) regarding the location of a refuelling access point (RAP1, RAP2, RAP3)/charging connector (CC1, CC2, CC3) on the vehicle (V) to be conveyed using the human machine interface (20) in response to a determination that a triggering event has occurred;
**characterized in that**:
the navigation system comprises a memory (16) holding a database including data identifying the location of fuel/charging stations;
and **in that** the system comprises means (26) for determining the speed of the vehicle (V);
and **in that** the control system (12) is configured to compute from a comparison of the vehicle location data and the fuel/charging station location data the distance between the vehicle (V) and respective fuel/charging stations and to determine that a triggering event has occurred when it determines that the vehicle (V) is within predetermined distance of a respective fuel/charging station and that the vehicle fuel/charge level is at or below a threshold level and that the vehicle's speed is at or below a threshold level.

2. A system (10) as claimed in claim 1, wherein the navigation system comprises a GPS system (18); and wherein the speed of the vehicle (V) is determined by the GPS system.

3. A system (10) as claimed in claim 1 or claim 2, wherein data identifying the types of fuel available at respective fuel stations is also stored in the database, the control system (12) being configured to determine that a triggering event has occurred only if the data identifies a fuel type appropriate to the vehicle (V) as being available at the nearest fuel station when the other predefined criteria are met.

4. A system (10) as claimed in any one of the previous claims, wherein the system is configured to also convey information (46) regarding the type of fuel used by the vehicle (V) when the control system (12) determines that a triggering event has occurred.

5. A system (10) as claimed in any one of the previous claims, wherein the system is configured for a vehicle (V) having a plurality of energy sources, and is further configured to check which fuel or energy source must be replenished most urgently.

6. A system (10) as claimed in any one of the previous claims, wherein the system is configured to account for the fuelling preferences of a vehicle user, taking data from a programmable ignition key or card.

7. A vehicle (V) comprising a system (10) for actively providing information regarding the location of a refuelling access point/charging connector as claimed in any one of claims 1 to 6, wherein the vehicle (V) has a refuelling access point (RAP1, RAP2, RAP3)/charging connector (CC1, CC2, CC3) located on one side of the vehicle, and the system (10) is configured to convey information (34, 36, 44) identifying the side of the vehicle on which the refuelling access point/charging connector is located and/or indicating on which side of a fuel pump/charging point (40) the vehicle (V) should be positioned for refuelling/charging.

8. A method for actively providing information (34, 36, 44) regarding the location of at least one refuelling access point (RAP1, RAP2, RAP3) and/or charging connector (CC1, CC2, CC3) on a vehicle (V); the vehicle comprising means (28) for determining the amount of fuel/charge remaining and generating fuel/charge level data, the method comprising using a navigation system to track in real-time the location of the vehicle (V) and to generate vehicle location data; the method further comprising determining the speed of the vehicle (V) and generating vehicle speed data; and using a control system (12) including a processor (14) programmed to use at least some of the vehicle location data and data identifying the location of fuel/charging stations stored in a memory (16) to determine in accordance with predefined criteria when a triggering event has occurred, and using a human machine interface (20) to convey information (34, 36, 44) regarding the location of a refuelling access point (RAP1, RAP2, RAP3)/charging connector (CC1, CC2, CC3) on the vehicle (V) in response to a determination that a triggering event has occurred;
**characterized in that**:
the control system is configured to determine that a triggering event has occurred when by comparison of the vehicle location data and the fuel/charging station location data, it determines that the vehicle (V) is within predetermined distance of a fuel/charging station and that the vehicle fuel/charge level is at or below a threshold level and that the speed of the vehicle (V) is at or below a threshold level.

9. A method as claimed in claim 8, using a system (10) according to any one of claims 1 to 6, wherein the refuelling access point (RAP1, RAP2, RAP3)/charging connector (CC1, CC2, CC3) is located on one side of the vehicle (V) and the system (10) is configured to convey information (34, 36, 44) identifying the side of the vehicle on which the refuelling access point/charging connector is located, and/or indicating on which side of a fuel pump/charging point (40) the vehicle (V) should be positioned for refuelling/charging, in response to a determination that a triggering event has occurred.

## Patentansprüche

1. System (10) zum aktiven Bereitstellen von Informationen bezüglich des Ortes wenigstens eines Auftank-Zugangspunktes (RAP1, RAP2, RAP3) und/oder eines Ladeanschlusses (CC1, CC2, CC3) an einem Fahrzeug (V), in dem das System eingebaut ist, wobei das System (10) Folgendes umfasst:
ein Navigationssystem, das dazu in der Lage ist, den geographischen Ort des Fahrzeugs (V) zu bestimmen und Daten zu erzeugen, die den Ort des Fahrzeugs angeben, und ein Steuerungssystem (12), das einen Prozessor (14) einschließt,
wobei das System (10) ebenfalls eine Mensch-Maschine-Schnittstelle (20) zum Übermitteln von Informationen umfasst, wobei das System ferner Mittel (28) zum Bestimmen der verbleibenden Menge an Kraftstoff/Ladung und Erzeugen von Kraftstoff-/Ladungspegeldaten umfasst,
wobei das System dafür konfiguriert ist, festzustellen, wenn ein Auslöseereignis stattgefunden hat,
und zu veranlassen, dass als Reaktion auf eine Feststellung, dass ein Auslöseereignis stattgefunden hat, Informationen (34, 36, 44) bezüglich des Ortes eines Auftank-Zugangspunktes (RAP1, RAP2, RAP3)/Ladeanschlusses (CC1, CC2, CC3) an dem Fahrzeug (V) unter Verwendung der Mensch-Maschine-Schnittstelle (20) übermittelt werden,
**dadurch gekennzeichnet, dass**:
das Navigationssystem einen Speicher (16) umfasst, der eine Datenbank hält, die Daten einschließt, die den Ort von Tank-/Ladestationen identifizieren,
und dadurch, dass das System Mittel (26) zum Bestimmen der Geschwindigkeit des Fahrzeugs (V) umfasst,
und dadurch, dass das Steuerungssystem (12) dafür konfiguriert ist, aus einem Vergleich zwischen den Fahrzeug-Ortsdaten und den Tank-/Ladestation-Ortsdaten die Entfernung zwischen dem Fahrzeug (V) und jeweiligen Tank-/Ladestationen zu berechnen und festzustellen, dass ein Auslöseereignis stattgefunden hat, wenn es feststellt, dass sich das Fahrzeug (V) innerhalb einer vorbestimmten Entfernung von einer jeweiligen Tank-/Ladestation befindet und dass der Fahrzeug-Kraftstoff-/Ladungspegel bei oder unter einem Schwellenpegel liegt und dass die Geschwindigkeit des Fahrzeugs bei oder unter einem Schwellenpegel liegt.

2. System (10) nach Anspruch 1, wobei das Navigationssystem ein GPS-System (18) umfasst und wobei die Geschwindigkeit des Fahrzeugs (V) durch das GPS-System bestimmt wird.

3. System (10) nach Anspruch 1 oder Anspruch 2, wobei Daten, welche die Arten von Kraftstoff, die an jeweiligen Tankstellen verfügbar sind, ebenfalls in der Datenbank gespeichert sind, wobei das Steuerungssystem (12) dafür konfiguriert ist, nur dann festzustellen, dass ein Auslöseereignis stattgefunden hat, falls die Daten eine für das Fahrzeug (V) geeignete Kraftstoffart als bei der nächsten Tankstelle verfügbar identifizieren, wenn die anderen vorbestimmten Kriterien erfüllt sind.

4. System (10) nach einem der vorhergehenden Ansprüche, wobei das System dafür konfiguriert ist, ebenfalls Informationen (46) bezüglich des durch das Fahrzeug (V) verwendeten Kraftstoffs zu übermitteln, wenn das Steuerungssystem (12) feststellt, dass ein Auslöseereignis stattgefunden hat.

5. System (10) nach einem der vorhergehenden Ansprüche, wobei das System für ein Fahrzeug (V) konfiguriert ist, das eine Vielzahl von Energiequellen aufweist, und ferner dafür konfiguriert ist, zu prüfen, welcher Kraftstoff oder welche Energiequelle am dringendsten aufgefüllt werden muss.

6. System (10) nach einem der vorhergehenden Ansprüche, wobei das System dafür konfiguriert ist, die Tankpräferenzen eines Fahrzeugbenutzers zu berücksichtigen, wobei es Daten von einem programmierbaren Zündschlüssel oder einer Karte nimmt.

7. Fahrzeug (V), das ein System (10) zum aktiven Bereitstellen von Informationen bezüglich des Ortes wenigstens eines Auftank-Zugangspunktes/Ladeanschlusses nach einem der Ansprüche 1 bis 6 umfasst, wobei das Fahrzeug (V) einen Auftank-Zugangspunkt (RAP1, RAP2, RAP3)/Ladeanschluss (CC1, CC2, CC3) aufweist, der auf einer Seite des Fahrzeugs angeordnet ist, und das System (10) dafür konfiguriert ist, Informationen (34, 36, 44) zu übermitteln, welche die Seite des Fahrzeugs identifizieren, auf welcher der Auftank-Zugangspunkt/Ladeanschluss angeordnet ist, und/oder angeben, auf welcher Seite einer Tanksäule/eines Ladepunktes (40) das Fahrzeug (V) zum Auftanken/Aufladen positioniert werden sollte.

8. Verfahren zum aktiven Bereitstellen von Informationen (34, 36, 44) bezüglich des Ortes wenigstens eines Auftank-Zugangspunktes (RAP1, RAP2, RAP3) und/oder eines Ladeanschlusses (CC1, CC2, CC3) an einem Fahrzeug (V), wobei das Fahrzeug Mittel (28) zum Bestimmen der verbleibenden Menge an Kraftstoff/Ladung und zum Erzeugen von Kraftstoff-/Ladungspegeldaten umfasst, wobei das Verfahren die Verwendung eines Navigationssystems umfasst, um in Echtzeit den Ort des Fahrzeugs (V) zu verfolgen und Fahrzeug-Ortsdaten zu erzeugen, wobei das Verfahren ferner das Bestimmen der Geschwindigkeit des Fahrzeugs (V) und das Erzeugen von Fahrzeug-Geschwindigkeitsdaten umfasst; sowie die Verwendung eines Steuerungssystems (12), das einen Prozessor (14) einschließt, der dafür programmiert ist, wenigstens einige der Fahrzeug-Ortsdaten und in einem Speicher (16) gespeicherte Daten, die den Ort von Tank-/Ladestationen identifizieren, zu verwenden, um in Übereinstimmung mit vorbestimmten Kriterien festzustellen, wenn ein Auslöseereignis stattgefunden hat, und die Verwendung einer Mensch-Maschine-Schnittstelle (20), um als Reaktion auf eine Feststellung, dass ein Auslöseereignis stattgefunden hat, Informationen (34, 36, 44) bezüglich des Ortes eines Auftank-Zugangspunktes (RAP1, RAP2, RAP3)/Ladeanschlusses (CC1, CC2, CC3) an dem Fahrzeug (V) zu übermitteln,
**dadurch gekennzeichnet, dass**:
das Steuerungssystem dafür konfiguriert ist, festzustellen, dass ein Auslöseereignis stattgefunden hat, wenn es durch Vergleich der Fahrzeug-Ortsdaten und der Tank-/Ladestation-Ortsdaten feststellt, dass sich das Fahrzeug (V) innerhalb einer vorbestimmten Entfernung von einer Tank-/Ladestation befindet und dass der Fahrzeug-Kraftstoff-/Ladungspegel bei oder unter einem Schwellenpegel liegt und dass die Geschwindigkeit des Fahrzeugs (V) bei oder unter einem Schwellenpegel liegt.

9. Verfahren nach Anspruch 8, das ein System (10) nach einem der Ansprüche 1 bis 6 verwendet, wobei der Auftank-Zugangspunkt (RAP1, RAP2, RAP3)/Ladeanschluss (CC1, CC2, CC3) auf einer Seite des Fahrzeugs (V) angeordnet ist, und das System (10) dafür konfiguriert ist, als Reaktion auf eine Feststellung, dass ein Auslöseereignis stattgefunden hat, Informationen (34, 36, 44) zu übermitteln, welche die Seite des Fahrzeugs identifizieren, auf welcher der Auftank-Zugangspunkt/Ladeanschluss angeordnet ist, und/oder angeben, auf welcher Seite einer Tanksäule/eines Ladepunktes (40) das Fahrzeug (V) zum Auftanken/Aufladen positioniert werden sollte.

## Revendications

1. Système (10) de fourniture active d'informations concernant l'emplacement d'au moins un point d'accès de ravitaillement en carburant (RAP1, RAP2, RAP3) et/ou d'au moins un connecteur de charge (CC1, CC2, CC3) sur un véhicule (V) dans lequel est installé le système, le système (10) comprenant :
un système de navigation capable de déterminer l'emplacement géographique du véhicule (V) et de générer des données indicatives de l'emplacement du véhicule, et un système de commande (12) incluant un processeur (14) ;
le système (10) comprend également une interface homme-machine (20) pour acheminer des informations ; le système comprenant en outre un moyen (28) pour déterminer la quantité de carburant/charge restante et générer des données de niveau de carburant/charge,
le système de commande étant configuré pour déterminer quand un événement déclencheur s'est produit ;
et pour provoquer l'acheminement d'informations (34, 36, 44) concernant l'emplacement d'un point d'accès de ravitaillement en carburant (RAP1, RAP2, RAP3)/d'un connecteur de charge (CC1, CC2, CC3) sur le véhicule (V), à l'aide de l'interface homme-machine (20) en réponse à une détermination qu'un événement déclencheur s'est produit ;
**caractérisé en ce que** :
le système de navigation comprend une mémoire (16) contenant une base de données incluant des données identifiant l'emplacement de stations-service/stations de charge ;
et **en ce que** le système comprend un moyen (26) pour déterminer la vitesse du véhicule (V) ;
et **en ce que** le système de commande (12) est configuré pour calculer, à partir d'une comparaison des données d'emplacement de véhicule et des données d'emplacement de stations-service/stations de charge, la distance entre le véhicule (V) et des stations-service/stations de charge respectives et pour déterminer qu'un événement déclencheur s'est produit lorsqu'il détermine que le véhicule (V) est à moins d'une distance prédéterminée d'une station-service/station de charge respective et que le niveau de carburant/de charge du véhicule est à un niveau seuil, ou inférieur à celui-ci, et que la vitesse du véhicule est à un niveau seuil ou inférieure à celui-ci.

2. Système (10) selon la revendication 1, dans lequel le système de navigation comprend un système GPS (18) ; et dans lequel la vitesse du véhicule (V) est déterminée par le système GPS.

3. Système (10) selon la revendication 1 ou la revendication 2, dans lequel des données identifiant les types de carburant disponibles dans des stations-service respectives sont également stockées dans la base de données, le système de commande (12) étant configuré pour déterminer qu'un événement déclencheur s'est produit uniquement si les données identifient un type de carburant approprié pour le véhicule (V) comme étant disponible dans la station-service la plus proche lorsque les autres critères prédéfinis sont satisfaits.

4. Système (10) selon l'une quelconque des revendications précédentes, dans lequel le système est configuré pour également acheminer des informations (46) concernant le type de carburant utilisé par le véhicule (V) lorsque le système de commande (12) détermine qu'un événement déclencheur s'est produit.

5. Système (10) selon l'une quelconque des revendications précédentes, dans lequel le système est configuré pour un véhicule (V) ayant une pluralité de sources d'énergie, et est en outre configuré pour vérifier quelle source de carburant ou d'énergie doit être remplie à nouveau le plus rapidement.

6. Système (10) selon l'une quelconque des revendications précédentes, dans lequel le système est configuré pour tenir compte des préférences de ravitaillement en carburant d'un utilisateur de véhicule, en prenant des données d'une clé ou d'une carte de contact programmable.

7. Véhicule (V) comprenant un système (10) de fourniture active d'informations concernant l'emplacement d'un point d'accès de ravitaillement en carburant/d'un connecteur de charge selon l'une quelconque des revendications 1 à 6, dans lequel le véhicule (V) a un point d'accès de ravitaillement en carburant (RAP1, RAP2, RAP3)/le connecteur de charge (CC1, CC2, CC3) situé sur un côté du véhicule, et le système (10) est configuré pour acheminer des informations (34, 36, 44) identifiant le côté du véhicule sur lequel est situé le point d'accès de ravitaillement en carburant/le connecteur de charge et/ou indiquant sur quel côté d'une pompe à carburant/d'un point de charge (40) le véhicule (V) doit être positionné pour se ravitailler en carburant/se recharger.

8. Procédé de fourniture active d'informations (34, 36, 44) concernant l'emplacement d'au moins un point d'accès de ravitaillement en carburant (RAP1, RAP2, RAP3) et/ou d'au moins un connecteur de charge (CC1, CC2, CC3) sur un véhicule (V) ; le véhicule comprenant un moyen (28) pour déterminer la quantité de carburant/de charge restante et générer des données de niveau de carburant/de charge, le procédé comprenant l'utilisation d'un système de navigation pour suivre en temps réel l'emplacement du véhicule (V) et pour générer des données d'emplacement de véhicule ; le procédé comprenant en outre la détermination de la vitesse du véhicule (V) et la génération de données de vitesse de véhicule ; et l'utilisation d'un système de commande (12) incluant un processeur (14) programmé pour utiliser au moins certaines des données d'emplacement de véhicule et des données identifiant l'emplacement de stations-service/stations de charge stockées dans une mémoire (16) pour déterminer selon les critères prédéfinis quand un événement déclencheur s'est produit, et l'utilisation d'une interface homme-machine (20) pour acheminer des informations (34, 36, 44) concernant l'emplacement d'un point d'accès de ravitaillement en carburant (RAP1, RAP2, RAP3)/d'un connecteur de charge (CC1, CC2, CC3) sur le véhicule (V) en réponse à une détermination qu'un événement déclencheur s'est produit ;
**caractérisé en ce que** :
le système de commande est configuré pour déterminer qu'un événement déclencheur s'est produit lorsque, par comparaison des données d'emplacement de véhicule et des données d'emplacement de stations-service/stations de charge, il détermine que le véhicule (V) est à moins d'une distance prédéterminée d'une station-service/station de charge et que le niveau de carburant/de charge du véhicule est à un niveau seuil ou inférieur à celui-ci et que la vitesse du véhicule (V) est à un niveau seuil, ou inférieure à celui-ci.

9. Procédé selon la revendication 8, utilisant un système (10) selon l'une quelconque des revendications 1 à 6, dans lequel le point d'accès de ravitaillement en carburant (RAP1, RAP2, RAP3)/le connecteur de charge (CC1, CC2, CC3) est situé sur un côté du véhicule (V) et le système (10) est configuré pour acheminer des informations (34, 36, 44) identifiant le côté du véhicule sur lequel le point d'accès de ravitaillement en carburant/le connecteur de charge est situé, et/ou indiquant sur quel côté d'une pompe à carburant/d'un point de charge (40) le véhicule (V) doit être positionné pour se ravitailler en carburant/se recharger, en réponse à une détermination qu'un événement déclencheur s'est produit.
